# EUROPEAN PATENT SPECIFICATION

(11) **EP 2 444 374 B1**
(45) Date of publication and mention of the grant of the patent: **26.05.2021**
(21) Application number: 10789521.1
(22) Date of filing: 16.06.2010
(51) Int. Cl.: C01B 33/40, C08J 5/18, C08K 9/06, C09C 1/42, C09C 3/12, C01B 33/44, C08L 77/00, C08L 79/08

(54) **MOISTURE-PROOF FILM FOR ELECTRONIC DEVICES**
FEUCHTIGKEITSFESTER FILM FÜR ELEKTRONISCHE VORRICHTUNGEN
FILM RÉSISTANT À L'HUMIDITÉ DESTINÉ À DES DISPOSITIFS ÉLECTRONIQUES

(30) Priority: 19.06.2009 JP 2009147055
(43) Date of publication of application: 25.04.2012
(73) Proprietor: National Institute of Advanced Industrial Science and Technology, Tokyo 100-8921 (JP)
(72) Inventor: EBINA, Takeo, Sendai-shi Miyagi 983-8551 (JP); TESHIMA, Nobuhiko, Sendai-shi Miyagi 983-8551 (JP); ISHII, Ryo, Sendai-shi Miyagi 983-8551 (JP); NAM, Hyun-Jeong, Sendai-shi Miyagi 983-8551 (JP); SUZUKI, Asami, Sendai-shi Miyagi 983-8551 (JP); MIZUKAMI, Fujio, Sendai-shi Miyagi 983-8551 (JP)
(74) Representative: V.O.
(86) International application number: PCT/JP2010/060209
(87) International publication number: WO 2010/147147

(56) References cited:
- EP-A1- 1 938 965
- JP-A- 2006 265 517
- JP-A- 2007 277 078
- JP-A- 2010 135 349
- TAKEO EBINA: ''Claist', the clay-based sheets' ANNALS OF THE HIGH PERFORMANCE PAPER SOCIETY vol. 03, no. 47, 2009, JAPAN, pages 63 - 69, XP008149999

## Description

### TECHNICAL FIELD

The invention relates to a method for manufacturing a moisture-proof film which is suitable for use in electronic devices. The moisture-proof film is flexible, has excellent water vapor barrier properties and gas barrier properties, as well as a mechanical strength that enables it to be used as a self-supporting film. The method of the invention provides a moisture-proof film that is suitable for electronic devices which can be used as a self-supporting film and, is chemically stable and capable of maintaining gas barrier properties even at elevated temperatures exceeding 150°C for example, and is, therefore, ideal for use as a substrate or protective film for electronic devices, such as a substrate film for LCD's, a film for LED's, or a backsheet for solar cells.

### BACKGROUND ART

Up until now, moisture-proof films for electronic devices endowed with excellent flexibility and excellent gas barrier properties and water vapor barrier properties have, in almost all cases, been manufactured using an organic polymer material as the base. Films with gas barrier properties are generally manufactured by a process in which a polymer resin film is used as the base and a gas barrier layer is formed on one or both sides of the polymer resin film. For example, a film of aluminum oxide, silicon oxide or silicon nitride is formed as the gas barrier layer by any of various techniques, such as chemical vapor deposition (CVD) or physical vapor deposition (PVD).

However, in films with gas barrier properties, the water vapor barrier properties and gas barrier properties are not perfect. The temperature for the heat resistance of engineering plastics which have the highest heat resistance is about 350°C. At higher temperatures, it has been necessary to use an inorganic sheet or metal sheet as the gas barrier material.

Of these, inorganic sheets are obtained by shaping a natural or synthetic mineral, such as mica or vermiculite, into the form of a sheet. Such sheets have a high heat resistance and do find some use as gas sealing members, such as gland packings. However, because they cannot be densely formed, it is impossible to completely block paths through which tiny gas molecules flow, as a result of which the gas barrier properties are not all that high. Although metal sheets do have excellent gas barrier properties, owing to drawbacks in weather resistance, electrical insulating properties and chemical resistance, applications for metal sheets are limited.

Properties desired of protective films and backsheets for devices used in harsh environments, such as solar cells, include not only UV resistance, moisture resistance, heat resistance and salt resistance, but also water vapor barrier properties, electrical insulating properties, mechanical strength, chemical resistance, and good adhesion to sealants. With regard to gas barrier properties as well, there exists a desire for films that are capable of being used in harsher environments than is possible with conventional materials.

Various polymeric resins are compounded as molding materials, dispersants, thickeners or binding agents with inorganic materials and used as gas barrier materials. By way of illustration, there exists compositions made up of a carboxyl group-containing resin (Resin A) having two or more carboxyl groups on the molecule e.g., polyacrylic acid and a high hydrogen gas bonding ability, a hydroxyl group-containing resin (Resin B) having two or more hydroxyl groups on the molecular chain e.g., starches and a high hydrogen gas bonding ability, and a clay mineral.

For example, it is known that by forming a composition of 100 parts by weight of a mixture of above resin A and resin B in a weight ratio A/B = 80/20 to 60/40 and 1 to 10 parts by weight of an inorganic layered compound such as a clay mineral, producing a film having a thickness of 0.1 to 50 µm from this composition, and subjecting the film to heat treatment or electron beam treatment, the treated film exhibits gas barrier properties (see Patent Document 1). However, in this case, because the resins used as additives are the principal ingredients, the film has an inferior heat resistance.

Also, by laminating a film made of a resin composition containing an inorganic layered compound and a resin between two polyolefin-based resin layers, a multilayer film can be obtained which has excellent moisture-proof properties and gas barrier properties, and which can be employed in food packaging (see Patent Document 2). However, in this case, the layer of the resin composition containing an inorganic layered compound can only be used as part of a multilayer film; use of it alone as a self-supporting film is not possible. Moreover, because the heat resistance of this type of multilayer film is determined by the organic material having the lowest heat resistance which is included in the multilayer film, in this case, a polyolefin, this type of material is generally unable to achieve a high heat resistance.

Various types of clay, such as smectite, mica, talc and vermiculite, are added as fillers to plastic in order to enhance the heat resistance and gas barrier properties of the plastic, which is an organic polymer. Because smectite, which has a high dispersibility in water, is hydrophilic, it has a low affinity for hydrophobic plastic, making high dispersion in plastic and the formation of a composite therewith difficult.

In cases where clay is to be formed into a composite with a hydrophobic plastic, the use of a modified clay which is obtained by the modification of clay so as to control the hydrophilicity/hydrophobicity is known (see Non-Patent Document 1). There are two types of methods for producing modified clay. One method is ion exchange by means of quaternary ammonium cations or quaternary phosphonium cations. The hydrophilicity/hydrophobicity can be controlled by means of the type of these organic cations and the proportions in which the cations are introduced (see Non-Patent Document 2).

The other method is silylation. Hydroxyl groups are present at the ends of the clay crystals. These hydroxyl groups react with the silylating agent that has been added, enabling the ends to be rendered hydrophobic. In this case as well, the hydrophilicity/hydrophobicity can be controlled by means of the type of silylating agent and the proportion in which the silylating agent is introduced. Both of these two types of modifying methods may also be used together.

Among film-forming methods, there exists a method of forming an inorganic layered compound thin film by employing the Langmuir-Blodgett method (see, for example, Non-Patent Document 3). In addition, various methods of preparing functional inorganic layered compound thin-films have been reported in the literature. One example is a method of forming a clay thin-film by forming an aqueous dispersion of a hydrotalcite intercalation compound into a film and drying the film (see Patent Document 3).

Many other examples exist in the prior art, including a method of producing a clay mineral thin-film in which the bond structure of the clay mineral has been oriented and fixed by utilizing a reaction between the clay mineral and phosphoric acid or phosphate radicals, and administering heat treatment which promotes the reaction (see Patent Document 4); and an aqueous composition for film treatment which contains a complex compound of smectite-type clay mineral and a metal having a valence of 2 or more (see Patent Document 5).

However, none of these methods has thus far yielded an inorganic layered, compound oriented, self-supporting film which has a mechanical strength that enables it to be used as a self-supporting film and wherein the layers of clay particles are highly oriented, conferring the film with gas barrier properties. The inventors have previously disclosed the following basic method for producing a clay self-supporting film by a simple process (see, for example, Patent Document 6).

(1) Clay particles are dispersed in a liquid which is a dispersant so as to prepare a uniform clay dispersion.
(2) The uniform clay dispersion is made to flow into a tray, or the like, and then left at rest, allowing the clay particles to settle, thus separating the liquid which is the dispersant by a solid-liquid separation means to form a clay film.
(3) The clay film is optionally dried under temperature conditions of 110 to 300°C, thereby forming a clay self-supporting film.

The inventors have previously disclosed a material made of a modified clay film composed primarily of modified clay and containing a small amount of additive, which film has gas barrier properties, water vapor barrier properties, water resistance, and a mechanical strength that enables use as a self-supporting film in such applications as packaging materials, sealing materials and electrical insulating materials (see Patent Document 7). However, in the field of electronic devices such as displays, fuel cells and solar cells, even further gas barrier properties, water vapor barrier properties, elasticity, mechanical strength, high heat resistance, water resistance and weather resistance are desired. Clay films capable of fulfilling such requirements remain to be developed and, therefore, have not yet achieved practical use.

Patent Document 1: Japanese Patent Application Laid-open No. H10-231434
Patent Document 2: Japanese Patent Application Laid-open No. H7-251489
Patent Document 3: Japanese Patent Application Laid-open No. H6-95290
Patent Document 4: Japanese Patent Application Laid-open No. H5-254824
Patent Document 5: Japanese Patent Application Laid-open No. 2002-30255
Patent Document 6: Japanese Patent Application Laid-open No. 2005-110550
Patent Document 7: Japanese Patent Application Laid-open No. 2007-277078

Non-Patent Document 1: Onigata, M.: Smectite, 8, No. 2, 8-13 (1998)
Non-Patent Document 2: Onigata, M.: Smectite, 13, No. 1, 2-15 (2003)
Non-Patent Document 3: Umezawa, Y: Nendo Kagaku (Clay Science), 42, No. 4, 218-222 (2003)

### DISCLOSURE OF THE INVENTION

In light of such circumstances, and bearing in mind the foregoing prior art, the inventors have conducted extensive investigations with the aim of developing a novel gas barrier membrane which has a mechanical strength enabling its use as a self-supporting film, is weather resistant, has excellent flexibility and can be used at elevated temperatures in excess of 200°C. In the course of such investigations, the inventors have succeeded in developing a moisture-proof film for electronic devices having a significantly increased film flexibility, water resistance and heat resistance by greatly enhancing the earlier disclosed film material in which a modified clay has been used and by adding major improvements, including a good modified clay and a suitable additive, suitable mixing proportions for the modified clay and the additive, a suitable solid-liquid ratio in the dispersion, a good support material and a good method of dispersion.

It is therefore an object of the invention to provide a method for the manufacture of a moisture-proof film for electronic devices which has a mechanical strength enabling its use as a self-supporting film, which has also improved gas barrier properties, water vapor barrier properties and water resistance and, moreover, which has excellent heat stability by orienting modified clay crystals and densely stacking the crystals.

The invention for resolving the above problems provides the following technical means.
(1) A method of manufacturing a moisture-proof film comprising a clay film containing modified clay as a principal ingredient, said method comprising:
   reacting clay with a silylating agent to prepare modified clay,
   exchanging intercalation ions in the modified clay with lithium ions, wherein at least 90 mol% of exchangeable ions in the modified clay are lithium ions,
   adding a solvent for a pre-gel to the lithium-exchanged modified clay and kneading the solvent and lithium-exchanged modified clay to form a modified clay pre-gel,
   preparing a uniform modified clay dispersion of said modified clay pre-gel in a polar solvent using an agitator or a homogenizer, wherein, at the final stage of dispersion, a homogenizer is used to eliminate lumps of modified clay in the dispersion, which modified clay dispersion includes the addition of an additive, has a modified clay concentration of from 0.3 to 15 wt%, is in the form of a clay paste and does not contain any lumps of modified clay, and
   applying the dispersion onto the surface of a support at a uniform thickness,
   evaporating said polar solvent to form a film, and then
   heat-treating the film at a temperature set to at least 230°C and up to 800°C for at least 20 minutes and not more than 24 hours to form said moisture-proof film containing said modified clay and said additive,
      which film has a water vapor transmission rate of less than 0.2 g/m²/day at 40°C and 90% relative humidity (measured with MOCON Aquatran Model 1; equal pressure method), and wherein the 5% weight loss temperature in thermogravimetric measurement of the modified clay film is at least 300°C and at most 760°C.
(2) The method according to (1) above, wherein the solvent for the pre-gel is water.
(3) The method according to (1) above, wherein the polar solvent is ethanol or dimethylacetamide.
(4) The method according to (1) above, wherein the moisture-proof film has a flexibility and a mechanical strength that enable use of the film as a self-supporting film, can be used at a bending radius of 3 mm without generating cracks [measured with a mandrel-type flex testing machine (ISO 1519)], and has a coefficient of permeability to oxygen gas of less than 1.3 × 10⁻²⁰mol m/m²sPa (4.0 × 10⁻¹⁵cm²/s ·cmHg) at room temperature (measured with a Gasperm-100 from JASCO Corporation).
(5) The method according to (1) above, wherein the clay film has a thickness of at least 0.003 mm and not more than 0.1 mm.
(6) The method according to (1) above, wherein the modified clay is formed using natural clay or synthetic clay.
(7) The method according to (1) above, wherein the clay used as the modified clay is at least one selected from the group consisting of mica, vermiculite, montmorillonite, beidellite, saponite, hectorite, stevensite, magadiite, ilerite, kanemite, illite and sericite.
(8) The method according to (1) above wherein, the amount of the silylating agent in the modified clay relative to the clay and the silylating agent is less than 30 wt%.
(9) The method according to (1) above, wherein the additive is a polyamide or a polyimide.

The method of the present invention is described below in greater detail.

The moisture-proof film produced in accordance with the method of the present invention is suitable for use in electronic devices and is characterized by (1) being formed of modified clay (the principal ingredient) and an additive, and (2) possessing water vapor barrier properties, and having a water vapor transmission rate of less than 0.2 g/m²/day at 40°C and 90% relative humidity (measured with MOCON Aquatran Model 1; equal pressure method). Preferably, the aforesaid moisture-proof film also (1) has a flexibility and a mechanical strength that render the film a self-supporting film, (2) can be used at a bending radius of 3 mm without generating cracks [measured with a mandrel-type flex testing machine (ISO 1519)], and (3) has a coefficient of permeability to oxygen gas of less than 4.0 × 10⁻¹⁵cm²/s·cmHg (4.0 × 10⁻¹⁵cm²/s·cmHg) at room temperature [measured with a Gasperm-100 from JASCO Corporation]. The clay film produced in accordance with the method of the present invention preferably has a thickness of at least 0.003 mm and not more than 0.1 mm.

In other preferred embodiments of the method of the present invention, the amount of the silylating agent in the modified clay relative to the clay and the silylating agent is less than 30 wt%; and the additive is a polyamide or a polyimide. Preferably, following 1 hour of immersion treatment of the moisture-proof film produced in accordance with the method of the present invention in superheated water having a temperature of 150°C, damage to the film shape is not visually observable.

As noted herein above, the present invention provides a method of manufacturing a moisture-proof film comprising a clay film containing modified clay as a principal ingredient, said method comprising:
reacting clay with a silylating agent to prepare modified clay,
exchanging intercalation ions in the modified clay with lithium ions, wherein at least 90 mol% of exchangeable ions in the modified clay are lithium ions,
adding a solvent for a pre-gel to the lithium-exchanged modified clay and kneading the solvent and lithium-exchanged modified clay to form a modified clay pre-gel,
preparing a uniform modified clay dispersion of said modified clay pre-gel in a polar solvent using an agitator or a homogenizer, wherein, at the final stage of dispersion, a homogenizer is used to eliminate lumps of modified clay in the dispersion, which modified clay dispersion includes the addition of an additive, has a modified clay concentration of from 0.3 to 15 wt%, is in the form of a clay paste and does not contain any lumps of modified clay, and
applying the dispersion onto the surface of a support at a uniform thickness,
evaporating said polar solvent to form a film, and then
heat-treating the film at a temperature set to at least 230°C and up to 800°C for at least 20 minutes and not more than 24 hours to form said moisture-proof film containing said modified clay and said additive,
which film has a water vapor transmission rate of less than 0.2 g/m²/day at 40°C and 90% relative humidity (measured with MOCON Aquatran Model 1; equal pressure method), and wherein the 5% weight loss temperature in thermogravimetric measurement of the modified clay film is at least 300°C and at most 760°C.

In preferred embodiments of the method of the present invention, a clay paste is obtained by adding the polar solvent to the modified clay pre-gel, then adding an additive and mixing the same, and has a viscosity of from 1 to 30 Pa·s; the pre-gel solvent is water; and the polar solvent is ethanol or dimethylacetamide.

By employing the process of dispersing an organic clay having a high water resistance and a small amount of an additive having a high water resistance in a solvent to obtain a uniform dispersion free of lumps, applying the dispersion to a support having a flat surface, evaporating the solvent serving as the dispersant so as to form the solid into a film, releasing the film from the support by drying, heating or cooling as required, and heat-treating the film as outlined herein above, a modified clay film is obtained in which the clay crystals are oriented, and which has a high water resistance, excellent flexibility, excellent gas barrier properties and a high heat resistance.

In this case, non-limiting examples of the above-mentioned evaporation of the solvent serving as the dispersant include methods of vacuum drying, vacuum freeze-drying and evaporation by heating. In the method of the present invention, the suitable modified clay and additive, the mixing proportions of the modified clay and the additive, the solid-liquid ratio of the dispersion, and the suitable support material may be set as desired keeping within the scope of appended claim 1. In this way, a film material can be obtained having improved film flexibility, water resistance and heat resistance.

That is, in the method of the present invention it is important to use modified clay having a high water resistance and a small amount of additive having a high water resistance, to shape the surface so as to be flat, to orient and densely stack the modified clay, to minimize non-uniformity which causes internal cracks and lumps, and to employ production conditions preferable for obtaining a uniform thickness and a mechanical strength that enables use as a self-supporting film. In this way, a flexible film having water resistance and having excellent heat stability and gas barrier properties can be obtained as a self-supporting film.

The clay used for preparation of the modified clay is a natural or synthetic material. Preferred examples include one or more selected from the group consisting of mica, vermiculite, montmorillonite, beidellite, saponite, hectorite, stevensite, magadiite, ilerite, kanemite, illite and sericite. The use of any one of these natural or synthetic materials, or a mixture thereof, is even more preferred. In the method of the present invention, the modified clay is prepared by reacting a clay with a silylating agent. In a particular embodiment of the method of the present invention, the amount of the silylating agent relative to the combined weight of the clay and the silylating agent is less than 30 wt%.

Illustrative, non-limiting, examples of the silylating agent included in the modified clay include methyltrimethoxysilane, methyltriethoxysilane, propyltrimethoxysilane, butyltrimethoxysilane, hexyltrimethoxysilane, octyltrimethoxysilane, dodecyltrimethoxysilane and octadecyltrimethoxysilane. With regard to the method of introducing the silylating agent into the clay, the introduction may be carried out by mixing 2 wt% (based on the starting clay) of silylating agent with the starting clay, and then milling these materials for 1 hour in a ball mill.

The additive is exemplified by polyamides and polyimides, but is not limited thereto. For example, major plastics, including general-purpose plastics such as the thermoplastic resins polyethylene, polypropylene, polyvinyl chloride, polystyrene, ABC resins and PET resins; engineering plastics such as polycarbonates, fluoroplastics and acetal resins; and thermoset resins such as phenolic resins, melamine resins, urea resins, polyurethanes, epoxy resins and unsaturated polyesters are effective as the additive for use in the method of the present invention.

By exchanging intercalation ions in the clay with lithium then heat-treating, the intercalated lithium migrates into the clay's octahedral layer and interlayer ionic components decrease, thereby increasing the water resistance. This increase in water resistance becomes striking when the lithium ions are made to account for at least 90 mol% of the interlayer ionic matter. Heat treatment is carried out following film formation, with the temperature conditions being set to at least 230°C, more preferably at least 300°C, and most preferably at least 350°C, and up to 800°C. Temperatures above 800°C are undesirable because the clay deteriorates. The duration of the heat-treatment (i.e., at temperature set to at least 230°C and up to 800°C) is at least 20 minutes and not more than 24 hours. At low temperatures, longer heat treatment tends to be required.

Various products are commercially available for use as the silylating agent when preparing silylated clay, some having reactive functional groups such as epoxy groups, acryl groups, amino groups or halogen groups. Silylated clays which have been prepared using silylating agents with such reactive ends have reactive ends themselves.

In this case, the light transmittance, gas barrier properties, water vapor barrier properties or mechanical strength can be improved by carrying out a chemical reaction, such as an addition reaction, condensation reaction or polymerization reaction, via treatment during or after film formation so as to form a new chemical bond. In particular, when the silylated clay has epoxy ends, covalent bonds can be formed between clay molecules by carrying out an epoxy reaction in treatment during or after film formation.

As described above, because silylated clays having various different reactive ends can be prepared, by mixing a silylated clay A having one type of reactive end with a silylated clay B having another type of reactive end and forming a film using this mixture as the starting material, it is possible to have the respective reactive ends of clay A and clay B chemically bond with each other in treatment during or after film formation, enabling the light transmittance, gas barrier properties, water vapor barrier properties or mechanical strength to be improved.

There are cases in which the modified clay disperses well in an organic solvent. Such additives and modified clay have a mutual affinity; when both are mixed in an organic solvent, they readily bond and form a composite. In the method of the present invention, a uniform dispersion is prepared by adding the modified clay and the additive to an organic solvent.

Examples of methods for preparing this dispersion include the method of dispersing the modified clay, then adding the additive; the method of dispersing the modified clay in an additive-containing solution; the method of preparing a dispersion by adding the modified clay and the additive to the dispersant at the same time; and the method of preparing separate dispersions of the modified clay and the additive, then mixing these together. From the standpoint of the ease of dispersion, it is preferable either to disperse the modified clay in an organic solvent, then add the additive, or to prepare separate dispersions of the modified clay and the additive, then mix these together.

In this case, first the modified clay is added to an organic solvent, and a dilute, uniform modified clay dispersion is prepared. The concentration of modified clay in this modified clay dispersion is from 0.3 to 15 wt%, and, preferably, from 1 to 10 wt%. If the concentration of modified clay is too low, drying will take too long. Conversely, if the concentration of modified clay is too high, the modified clay will not disperse well. As a result, lumps tend to arise and a uniform film does not form, leading to problems, such as cracking and surface roughness on account of shrinkage during drying, and a non-uniform film thickness. The modified clay dispersion prior to film formation has a viscosity of, preferably, from 1 to 30 Pa·s and, more preferably, from 1 to 20 Pa·s.

Next, the additive or the solution containing the additive is weighted and then added to the modified clay dispersion so as to prepare a uniform dispersion containing both the modified clay and the additive. As mentioned above, the modified clay and the additive thoroughly disperse in certain types of organic solvents. Also, because the modified clay and additive have affinity to each other, when both are mixed in a solvent, they easily interact to form a composite. The weight ratio of the additive relative to the total solids is less than 30 wt%, and preferably from 5 wt% to 20 wt%.

The organic solvent used is not subject to any particular limitation, provided it is one that disperses the modified clay and dissolves the additive. Various polar solvents may be used for this purpose. Preferred examples include ethanol, ether, dimethylformamide, tetrahydrofuran, acetone and toluene. If the proportion of additive at this time is too low, the desirable effects of additive use will not appear; on the other hand, if the proportion of additive is too high, the heat resistance of the resulting film will decrease.

The method of dispersion must be a method which is capable of the most vigorous possible dispersion and may be chosen from methods involving the use of an agitator equipped with an agitating element, a shaking-type agitator, or a homogenizer, wherein a homogenizer is to be used at the final stage of dispersion to eliminate small lumps of modified clay in the dispersion. When lumps remain in the dispersion, this causes roughness of the film surface or non-uniformity in the film composition.

Next, if necessary, the dispersion is subjected to deaeration. Methods of deaeration include drawing a vacuum, heating and centrifugation, although a method which includes drawing a vacuum is more preferred. The dispersion is then applied onto the surface of a support at a uniform thickness. Next, the solvent serving as the dispersant is slowly evaporated so that the solid matter remaining forms a film. The composite inorganic layered compound film that has been formed in this way is preferably dried by, for example, centrifugal separation, filtration, vacuum drying, vacuum freeze-drying or evaporation by heating, or by some combination of these methods.

Of these methods, when use is made of evaporation by heating, for example, the dispersion is applied onto a support such as a flat tray, e.g., a tray made of brass, polypropylene or Teflon® and, with the tray held in a horizontal state, the solvent is gradually evaporated within a forced-draft oven under temperature conditions of from 30°C to 90°C, preferably from 30°C to 60°C, and for a period of from about 10 minutes to 24 hours.

If releasability with the film materials is inadequate, the film will remain attached to the support, making release difficult. To improve the releasability, some type of surface treatment may be carried out on the surface of the support, such as fluorine film treatment on a metal material. It is desirable for the support surface to be as flat as possible. If the surface of the support is not flat, the support surface roughness will be transferred to the film surface, lowering the smoothness of the film surface.

In cases where the dispersion is not subjected to deaeration beforehand, holes due to air bubbles may form in the resulting composite inorganic layered compound film. If bubbles are present in the composite modified clay film, the film uniformity decreases, in addition to which the bubbles cause the internal scattering of light, clouding the film. The drying conditions are set so as to be sufficient to remove the liquid content by evaporation. If the temperature at this time is too low, drying will take a long time. On the other hand, if the temperature is too high, dispersant convection will arise, preventing a uniform film thickness from being achieved, and the degree of orientation by the modified clay particles will decrease.

With regard to the thickness of the film, a film of the desired thickness can be obtained by increasing or decreasing the weight of the solids used in the dispersion. When a thin film has been formed, the surface smoothness tends to be excellent. On the other hand, making the film thicker has the drawback of lowering the flexibility. It is desirable for the thickness of the film to be not more than 0.2 mm.

In the present disclosure, "highly orienting" the lamination of the modified clay particles is defined as stacking unit structural layers (having a thickness of from about 1 nm to about 1.5 nm) of the modified clay particles in the direction of the layer face, and imparting a high periodicity in the direction perpendicular to the layer face. In order to obtain such a modified clay particle orientation, it is important for a dilute, uniform dispersion containing the modified clay and the additive to be applied to a support, and for the liquid serving as the dispersant to be slowly evaporated so that the modified clay particles form into a densely stacked layer.

The production conditions for such film formation include a concentration of modified clay in the modified clay dispersion of from 0.3 to 15 wt%, and preferably from 1 to 10 wt%. When an evaporation by drying process is used, although the drying conditions depend also on the type of solvent used, drying is carried out at from room temperature to 90°C, and preferably from 30°C to 60°C, for a period of from about 10 minutes to 24 hours until the solvent completely evaporates.

In cases where the additive-containing composite modified clay film does not release spontaneously from the tray or other support, it is preferable to obtain a self-supporting film by drying under temperature conditions of about 80°C to 200°C to facilitate release. A drying time of 1 hour is sufficient. If the temperature at this time is too low, release may not readily occur. On the other hand, if the temperature is too high, the additive may deteriorate, leading to such undesirable results as film coloration, a decrease in mechanical strength, and a decline in the gas barrier properties.

With regard to the moisture-proof film itself, this is a clay film which uses modified clay as the main starting material and is basically constructed so as to have a layer thickness of about 1 to 2 nm and to include up to 30 wt% of a natural or synthetic low-molecular-weight or high-molecular-weight additive having a particle size of up to 5 µm and a molecular size of up to several nanometers. This clay film may be fabricated by orienting in the same direction and densely stacking modified clay layered crystals having a thickness of about 1 to 1.5 nm.

The resulting clay film has a film thickness of from 3 to 100 µm, and preferably from 3 to 80 µm. As for the gas barrier performance, the coefficient of permeability to oxygen gas is less than 1.3 × 10⁻²⁰mol m/m²sPa (4.0 × 10⁻¹⁵cm²/s·cmHg) at room temperature. The film may be given a large surface area of 10 × 40 cm or more.

The film has a high heat resistance, and does not exhibit a decline in gas barrier properties, even after 1 hour of heat treatment at 150°C. Moreover, it has a high water resistance, and does not exhibit a decline in gas barrier properties, even after 1 hour of immersion in water at room temperature. Also, it has a high resistance to hot water, and does not exhibit a decrease in gas barrier properties, even after 1 hour of immersion in 150°C water. The clay film has a volume resistivity in the film perpendicular direction of at least 10 MΩ. By taking advantage of these electrical insulating properties, the film can be used in a broad range of applications as an insulating film.

Because the moisture-proof film produced in accordance with the method of the present invention has excellent flexibility and processability, it is also possible to apply a roll-to-roll process. For example, the film can easily be cut into any desired size and shape, such as a circular, square or rectangular shape, with scissors or a cutter, and also has an excellent punchability.

Because silicates are the principal ingredient of the film, the film has a better resistance to radiation than plastic materials, and may be used as a packaging material for pharmaceutical products which are subjected to radiation sterilization with gamma rays or electron beams. The moisture-proof film produced in accordance with the method of the present invention readily bonds to other materials, enabling the use of common adhesives and enabling surface coating. By means of surface coating and lamination, gas barrier properties, water vapor barrier properties, water resistance, heat resistance and fire retardance can be improved.

Examples of multilayer films include films obtained by laminating the moisture-proof film produced in accordance with the method of the present invention with a metal foil, plastic film, or paper. Examples of plastic films which may be used in such cases include films made of polyethylene, polypropylene, polyethylene terephthalate, polyamide, fluoroplastic, acrylic resin or polyimide.

Illustrative examples of the material on which the moisture-proof film produced in accordance with the method of the present invention may be surface coated include metals, metal oxides, ceramics, plastics, expanded plastics, wood, gypsum board and rubber. By surface coating the moisture-proof film onto such materials, the oxidation resistance, corrosion resistance, weather resistance, gas barrier properties, water vapor barrier properties, water resistance, heat resistance, chemical resistance and flameproof properties of the materials can be improved.

Hence, the moisture-proof film produced in accordance with the method of the present invention may be used in a broad range of applications as a self-supporting film having excellent flexibility and excellent gas barrier and water vapor barrier properties under high-temperature conditions. The moisture-proof film produced in accordance with the method of the present invention may be used as, for example, flexible packaging materials, sealing materials, insulating materials and fuel cell membranes which are chemically stable and capable of maintaining water resistance, even at, for example, elevated temperatures above 150°C.

Moreover, in the moisture-proof film produced in accordance with the method of the present invention, the additive and the modified clay interact to form a thin film of excellent flexibility, strength and water resistance. For this reason, ready failure of the modified clay thin-film by pulling or torsion is suppressed, making it possible to obtain a moisture-proof film that can be used as a self-supporting film which has excellent properties.

The moisture-proof film produced in accordance with the method of the present invention may be used as, for example, a substrate film for LCD's, a substrate film for organic EL devices, a substrate film for electronic paper, a sealing film for electronic devices, a film for PDP's, a film for LED's, a component for optical communications, a substrate film for various types of functional films, a film for IC tags, and flexible films for other electronic equipment.

The moisture-proof film may also be used as substrate, sealing- and protective films associated with electronic devices and electronic equipment, such as sealing films for fuel cells, protective films for solar cells, and backsheets for solar cells; and as films for packaging various types of products, such as films for packaging foods, films for packaging beverages, films for packaging pharmaceuticals, films for packaging household commodities, and films for packaging industrial products. In addition, the moisture-proof film produced in accordance with the method of the present invention may be used in a broad range of applications as gas barrier sealants for gaseous species, including carbon dioxide and hydrogen.

The method of the present invention for the production of a moisture-proof film achieves effects such as the following.
(1) The resultant moisture-proof film makes it possible to fulfill all the requirements of excellent weather resistance, gas barrier properties, water vapor barrier properties, flexibility, heat resistance, electrical insulating properties and water resistance.
(2) The resultant moisture-proof film can be used as a self-supporting film. For example, even at elevated temperatures exceeding 150°C, it has chemical stability and can maintain gas barrier properties.
(3) The resultant moisture-proof film can be advantageously used as a substrate or protective film for an electronic device, such as a substrate film for a LCD, a film for a LED, and a backsheet for a solar cell.
(4) The resultant moisture-proof film can also be advantageously used as a flexible gas sheet material, packaging material, sealing material or electrical insulating material.
(5) The resultant moisture-proof film, by being applied onto the surface of, for example, metal, plastic, rubber, paper or ceramic, can be rendered into a multilayer film and used in a wide range of applications.
(6) The resultant moisture-proof film, by being applied to the surface of, for example, metal, metal oxide, ceramic, plastic, expanded plastics, wood, gypsum board or rubber, can be used in a wide range of applications as a surface-protecting film.
(7) The resultant moisture-proof film has excellent heat resistance and thus, can be directly laminated with various types of plastic films by hot pressing.
(8) The resultant moisture-proof film can be laminated as a base film with resins by an extrusion laminating process.

### BRIEF DESCRIPTION OF THE INVENTION

FIG. 1 shows a TG-DTA chart in Example 1 according to the invention.
FIG. 2 shows a TG-DTA chart in Example 2 according to the invention.

### BEST MODE FOR CARRYING OUT THE INVENTION

Next, the invention is illustrated more concretely by way of examples. However, the invention is not in any way limited by the following examples.

### Example 1

### (1) Production of Modified Clay

Kunipia F (from Kunimine Industries Co., Ltd.), a natural purified bentonite, was thoroughly dried in an oven at a temperature of at least 110°C. This bentonite (300 g) was placed, together with alumina balls, in a pot for ball mill. Next, 6 g of a silylating agent (Sila-Ace S330, from Chisso Corporation) was added thereto, the pot interior was substituted with nitrogen gas, and was treated with the ball mill for 1 hour to give a modified clay.

A silylating agent with an amino group at the end was used as the silylating agent. To 400 mL of an 0.5N aqueous solution of lithium nitrate was added 24 g of modified clay, and was shaken and dispersed to effect mixture and dispersion. The intercalated ions of the clay were exchanged with lithium ions by carrying out the shaking and dispersing for 2 hours.

Next, the dispersion was centrifugally separated to effect solid-liquid separation, and the resulting solid was washed with a mixed solution composed of 280 g of distilled water and 120 g of ethanol, thereby removing surplus salt. This washing operation was repeated two or more times. The resulting product was thoroughly dried in an oven and then crushed, yielding a lithium-exchanged modified clay.

### (2) Production of Clay Paste

Ten grams of the above lithium-exchanged modified clay was weighed out and placed in a vessel. Next, 20 mL of pure water was added thereto and left to stand for about 10 minutes so as to allow the water to blend with the clay. Next, the contents were lightly mixed with a stainless steel spatula. Mixing treatment was then carried out with a mixer at 2,000 rpm for 10 minutes. To this was, again, added 20 mL of pure water, after which kneading was carried out in such a way that the pure water disperses throughout the material, and the material was worked until it gathered entirely into a single mass.

The treatment was carried out for 10 minutes at 2,000 rpm in the mixing mode. Compared with the first mixing treatment, all of the material formed into a single mass of clay pre-gel. All of the remaining 50 mL of the pure water was added thereto, and the material was thoroughly kneaded with a stainless steel spatula. Any large lumps (gel masses) that remained were crushed as much as possible. Mixing treatment was again carried out for 10 minutes at 2,000 rpm.

The resulting gel was dispersed in ethanol using a homogenizer (ULTRA TURRAX T50, from IKA), wherein ethanol in an amount (250 g) corresponding to 25 times the weight of the clay was placed in a suitable vessel, and, as the ethanol was being agitated in the homogenizer, the clay pre-gel was added thereto. This agitation was continued at about 7,000 rpm for about 30 minutes.

Following homogenizer treatment, about 120 g of this dispersion was collected and placed in a separate vessel, and 4.71 g of N-methoxymethylated nylon (Toresin FS350, from Nagase ChemteX Corporation) was added. Deaeration was carried out with a mixer at 2,000 rpm for 10 minutes in the mixing mode, and at 2,200 rpm for 10 minutes in the deaeration mode.

The viscosity at this time was from 1.0 to 1.2 Pa·s, the average value being 1.1 Pa·s (TVB-22L, from Toki Sangyo Co., Ltd.). The paste was then cast onto a Teflon® sheet, and the paste was spread to a uniform thickness with a casting knife. The paste thickness here was set to 2 mm.

### (3) Production of Moisture-Proof Film

Next, the above paste was dried overnight in a forced convection oven at a temperature of 60°C, released from the Teflon® sheet, and heat-treated in a heating oven. In this heat treatment, the temperature was ramped up to 300°C at a rate of 100°C/hour, and then held at 300°C for 2 hours. By means of this heat treatment, a moisture-proof film composed of a lithium-exchanged modified clay film having a thickness of about 30 µm was obtained.

### (4) Properties of Moisture-Proof Film

The flexibility of the resulting moisture-proof film was measured using a mandrel-type flex testing machine (ISO 1519). No cracks or other defects arose in this film, even when curved to a diameter of 2 mm. Moreover, the water vapor transmission rate was less than 0.17 g/m²/day (measured with a MOCON Aquatran Model 1; equal pressure method).

Also, following treatment at 200°C for 1 hour, the tensile strength at room temperature was 39.5 MPa and the extensibility was 2.6% (test pieces: 1 cm wide strip specimens). In addition, the coefficient of permeability to oxygen gas at room temperature was confirmed to be less than 1.02×10⁻²⁰ mol m/m²sPa (3.05 × 10⁻¹⁵cm²/s·cmHg) [as measured with a Gasperm-100, from JASCO Corporation].

### (5) Thermal Analysis of Moisture-Proof Film

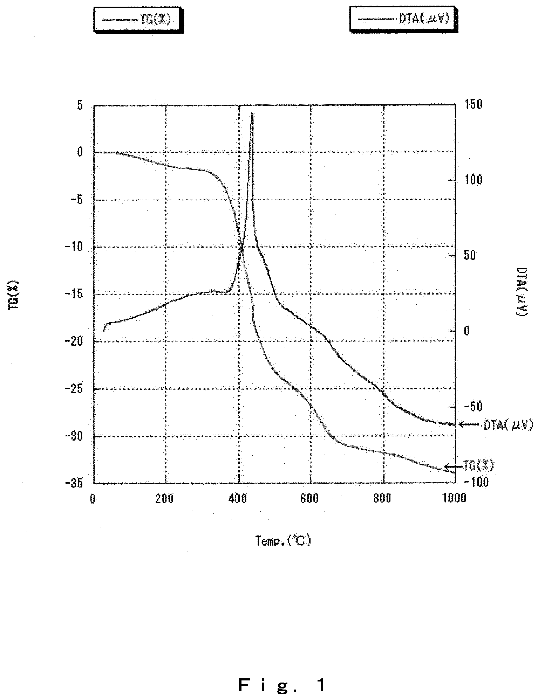

Thermal analysis (Rigaku Thermoplus TG8120) was carried out at a ramp-up rate of 10°C/min in a normal air flow atmosphere. FIG. 1 shows the TG-DTA chart. From the TG curve, a weight loss of about 2% due to the removal of adsorbed water was observed from room temperature to 250°C, a sharp peak in the DTA curve was observed near 500°C, and a weight loss of about 20% accompanying thermal degradation of the organic matter was observed from 300°C to 700°C. The 5% weight loss temperature was about 350°C.

### Example 2

### (1) Production of Clay Paste

A lithium-exchanged modified clay was obtained in the same way as in Example 1. A clay pre-gel was prepared by adding 9 parts by weight of pure water to 1 part by weight of this modified clay, and mixing and kneading the clay and water together. The resulting gel was dispersed in dimethylacetamide using a homogenizer (ULTRA TURRAX T50, from IKA; the shaft was S50N-G45F, also from IKA)

Dimethylacetamide in an amount (350 g) corresponding to 35 times the weight of the clay was placed in a suitable vessel and, as the dimethylacetamide was being agitated in the homogenizer, the clay pre-gel was added thereto. This agitation was continued at about 7,000 rpm for about 30 minutes. Following homogenizer treatment, about 120 g of the dispersion was collected and placed in a separate vessel, and 4.76 g of polyimide varnish (U-Varnish A, from Ube Industries, Ltd.) was added.

Deaeration was carried out with a mixer at 2,000 rpm for 10 minutes in the mixing mode, and at 2,200 rpm for 10 minutes in the deaeration mode. The viscosity at this time was from 1.3 to 2.0 Pa·s, the average value being 1.4 Pa·s (TVB-22L, from Toki Sangyo Co., Ltd.). Next, the paste was cast onto a Teflon® sheet, and the paste was spread to a uniform thickness with a casting knife. The paste thickness here was set to 1 mm.

### (2) Production of Moisture-Proof Film

Next, the above paste was dried overnight in a forced convection oven at a temperature of 60°C, released from the Teflon® sheet, and heat-treated in a heating oven. In this heat treatment, the temperature was ramped up to 150°C at a rate of 100°C/hour, then held at 150°C for 2 hours. Next, the temperature was ramped up to 230°C at 100°C/hour, then held at 230°C for 24 hours. By means of this heat-treatment, a moisture-proof film composed of a lithium-exchanged modified clay film having a thickness of about 20 µm was obtained.

### (3) Properties of Moisture-Proof Film

The flexibility of the resulting moisture-proof film was measured using a mandrel-type flex testing machine (ISO 1519). No cracks or other defects arose in this film, even when curved to a diameter of 2 mm. Moreover, the water vapor transmission rate was less than 3.0 × 10⁻² g/m²/day (measured with a MOCON Aquatran Model 1; equal pressure method). Also, following treatment at 200°C for 1 hour, the tensile strength at room temperature was 60.6 MPa and the extensibility was 5.5% (test pieces: 1 cm wide strip specimens).

### (4) Thermal Analysis of Moisture-Proof Film

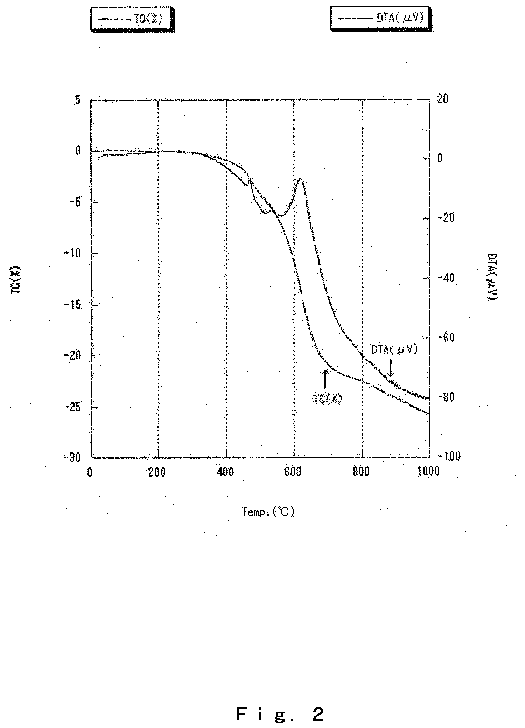

Thermal analysis (Rigaku Thermoplus TG8120) was carried out at a ramp-up rate of 10°C/min in a normal air flow atmosphere. FIG. 2 shows the TG-DTA chart. From the TG curve, no weight loss was observed from room temperature to 300°C, and a weight loss of about 20% accompanying thermal degradation of the organic matter was observed from 400°C to 700°C. The 5% weight loss temperature was 500°C.

### (5) Heat Resistance of Moisture-Proof Film

The test-produced moisture-proof film was placed in an autoclave and distilled water was poured in so as to immerse the film. The autoclave was then set in an electric furnace and heated. The temperature was raised from room temperature to 150°C in about 20 minutes. The autoclave was subsequently held at 150°C for 1 hour, then allowed to cool within the furnace. This was immersed in distilled water for 1 hour.

Following the above treatment, no abnormalities such as pinholes or cracks were visually observed. The coefficient of permeability to oxygen gas by this film was measured with a Gasperm-100 from JASCO Corporation. As a result, the coefficient of permeability to oxygen gas at room temperature was confirmed to be less than 1.02×10⁻²⁰ mol m/m²sPa (3.05 × 10⁻¹⁵cm²/s·cmHg).

### Comparative Examples 1

### (1) Production of Clay Paste and Clay Film

A uniform dispersion was prepared by adding 2.5 g of natural montmorillonite (Kunipia P, from Kunimine Industries Co., Ltd.) and 0.7 g of synthetic mica (Somasif ME-100, from Co-op Chemical Co., Ltd.) as the clay to 94 mL of distilled water, placing these materials together with a Teflon® rotor in a plastic sealed vessel, and vigorously shaking at 25°C for 2 hours.

To this dispersion was added 0.18 g of methyl vinyl ether-maleic anhydride copolymer (from Daicel Chemical Industries, Ltd.) as the additive, and the materials were vigorously shaken to give a uniform dispersion containing natural montmorillonite and ε-caprolactam. This was gradually dried, giving a clay paste. Next, the clay paste was deaerated with a vacuum deaerator.

The clay paste was then cast onto a Teflon® sheet and spread with a casting knife so as to form a clay paste film having a uniform thickness of 2 mm. The tray was dried for 1 hour in a forced convection oven at a temperature of 60°C, thereby giving a uniform additive-clay film having a thickness of about 40 µm. The clay film thus formed was released from the tray, giving a self-supporting clay film having an excellent flexibility.

### (2) Properties of Clay Film

The resulting clay film was immersed for 1 hour in distilled water, whereupon the clay making up the film redispersed in water, and the film shape was lost. The water vapor transmission rate, as measured by the cup method (JIS Z0208-1976), was 71.9 g/m²/day at 40°C and 90% relative humidity.

### INDUSTRIAL APPLICABILITY

As described in detail above, the invention relates to a method for the production of a moisture-proof film in which modified clay serves as the principal ingredient. The moisture-proof film is characterized by being capable of use as a self-supporting film, being capable of use at elevated temperatures above 150°C, having an excellent water resistance, having excellent flexibility, having excellent gas barrier and water vapor barrier properties, and being capable of use as a multilayer film by lamination with films composed of other materials or as a surface protecting film on other materials. Moreover, the moisture-proof film produced in accordance with the method of the present invention has ionic conductivity.

The moisture-proof film can be used in numerous products, including as electronic device-related films such as substrate films for LCD's, substrate films for organic EL devices, substrate films for electronic paper, sealing films for electronic devices, films for PDP's, films for LED's, films for IC tags, backsheets for solar cells and protective films for solar cells; components for optical communications and flexible films for other electronics equipment; fuel cell membranes, sealing films for fuel cells, and substrate films for various types of functional films; packaging films for various types of products, including films for packaging foods, films for packaging beverages, films for packaging pharmaceuticals, films for packaging household commodities and films for packaging industrial products; and also gas barrier sealing tape for gaseous species including carbon dioxide and hydrogen, multilayer packaging films, antioxidation films, corrosion resistant films, weathering resistant films, nonflammable films, heat-resistant films and chemical-resistant films.

## Claims

1. A method of manufacturing a moisture-proof film comprising a clay film containing modified clay as a principal ingredient, said method comprising:
reacting clay with a silylating agent to prepare modified clay,
exchanging intercalation ions in the modified clay with lithium ions, wherein at least 90 mol% of exchangeable ions in the modified clay are lithium ions,
adding a solvent for a pre-gel to the lithium-exchanged modified clay and kneading the solvent and lithium-exchanged modified clay to form a modified clay pre-gel,
preparing a uniform modified clay dispersion of said modified clay pre-gel in a polar solvent using an agitator or a homogenizer, wherein, at the final stage of dispersion, a homogenizer is used to eliminate lumps of modified clay in the dispersion, which modified clay dispersion includes the addition of an additive, has a modified clay concentration of from 0.3 to 15 wt%, is in the form of a clay paste and does not contain any lumps of modified clay, and
applying the dispersion onto the surface of a support at a uniform thickness,
evaporating said polar solvent to form a film, and then
heat-treating the film at a temperature set to at least 230°C and up to 800°C for at least 20 minutes and not more than 24 hours to form said moisture-proof film containing said modified clay and said additive,
which film has a water vapor transmission rate of less than 0.2 g/m²/day at 40°C and 90% relative humidity (measured with MOCON Aquatran Model 1; equal pressure method), and wherein the 5% weight loss temperature in thermogravimetric measurement of the modified clay film is at least 300°C and at most 760°C.

2. The method according to claim 1, wherein the solvent for the pre-gel is water.

3. The method according to claim 1, wherein the polar solvent is ethanol or dimethylacetamide.

4. The method according to claim 1, wherein the moisture-proof film (1) has a flexibility and a mechanical strength that render the film a self-supporting film, (2) when used at a bending radius of 3 mm, does not generate cracks [measured with a mandrel-type flex testing machine (ISO 1519)], and (3) has a coefficient of permeability to oxygen gas of less than 1.3 × 10⁻²⁰mol m/m²sPa (4.0 × 10⁻¹⁵cm²/s ·cmHg) at room temperature (measured with a Gasperm-100 from JASCO Corporation).

5. The method according to claim 1, wherein the clay film has a thickness of at least 0.003 mm and not more than 0.1 mm.

6. The method according to claim 1, wherein the modified clay is formed using natural clay or synthetic clay.

7. The method according to claim 1, wherein the clay used for the modified clay is at least one selected from the group consisting of mica, vermiculite, montmorillonite, beidellite, saponite, hectorite, stevensite, magadiite, ilerite, kanemite, illite and sericite.

8. The method according to claim 1, wherein the amount of the silylating agent in the modified clay relative to the clay and the silylating agent is less than 30 wt%.

9. The method according to claim 1, wherein the additive is a polyamide or a polyimide.

## Patentansprüche

1. Verfahren zum Herstellen eines wasserfesten Films umfassend einen Tonfilm enthaltend modifizierten Ton als ein ersten Bestandteil, das Verfahren umfassend:
Umsetzen von Ton mit einem Silylierungsmittel, um modifizierten Ton zu bereiten,
Austauschen von Interkalationsionen in dem modifizierten Ton mit Lithiumionen, wobei mindestens 90 mol-% von austauschbaren Ionen in dem modifizierten Ton Lithiumionen sind,
Hinzufügen eines Lösungsmittels für ein Pre-Gel zu dem Lithium-ausgetauschten modifizierten Ton und Kneten des Lösungsmittels und des Lithium-ausgetauschten modifizierten Tons, um ein modifiziertes Ton Pre-Gel zu formen,
Bereiten einer gleichmäßig modifizierten Tondispersion des modifizierten Ton Pre-Gels in einem polaren Lösungsmittel unter Verwendung eines Agitators oder eines Homogenisators, wobei, in der finalen Stufe der Dispersion, ein Homogenisator verwendet wird, um Klumpen von modifiziertem Ton in der Dispersion zu entfernen, wobei die modifizierte Tondispersion das Hinzufügen eines Additivs einschließt, eine modifizierte Tonkonzentration von von 0,3 bis 15 Gew.-% hat, in der Form einer Tonpaste ist und nicht irgendwelche Klumpen von modifiziertem Ton enthält, und
Applizieren der Dispersion auf die Oberfläche einer Stütze in einer gleichmäßigen Dicke,
Evaporieren des polaren Lösungsmittels, um einen Film zu formen, und dann
Hitze-Behandeln des Films bei einer Temperatur, eingestellt auf wenigstens 230°C und bis zu 800°C, für wenigstens 20 Minuten und nicht mehr als 24 Stunden, um den wasserfesten Film zu bilden, enthaltend den modifizierten Ton und das Additiv,
wobei der Film eine Wasserdampf-Transmissionsrate von weniger als 0,2 g/m²/Tag bei 40°C und 90% relativer Feuchtigkeit (gemessen mit MOCON Aquatran Model 1; Gleichdruck-Verfahren) hat, und wobei die 5% Gewichtsverlust Temperatur in thermogravimetrischer Messung des modifizierten Tonfilms wenigstens 300°C und höchstens 760°C ist.

2. Verfahren nach Anspruch 1, wobei das Lösungsmittel für das Pre-Gel Wasser ist.

3. Verfahren nach Anspruch 1, wobei das polare Lösungsmittel Ethanol oder Dimethylacetamid ist.

4. Verfahren nach Anspruch 1, wobei der wasserfeste Film (1) eine Flexibilität und eine mechanische Stärke hat, die den Film zu einem selbststützenden Film machen, (2) wenn bei einem Biegeradius von 3 mm verwendet, keine Risse generiert [gemessen mit einer dornartigen Flextestmaschiene (ISO 1519)], und (3) einen Permeabilitätskoeffizienten von Sauerstoffgas von weniger als 1,3 x 10⁻²⁰ mol m/m²sPa (4,0 x 10⁻¹⁵ cm²/s·cmHg) bei Raumtemperatur (gemessen mit Gasperm-100 von JASCO Cooperation) hat.

5. Verfahren nach Anspruch 1, wobei der Tonfilm eine Dicke von wenigstens 0,003 mm und nicht mehr als 0,1 mm hat.

6. Verfahren nach Anspruch 1, wobei der modifizierte Ton unter Verwendung von natürlichem Ton oder synthetischem Ton geformt wird.

7. Verfahren nach Anspruch 1, wobei der Ton, verwendet für den modifizierten Ton wenigstens einer ist, ausgewählt aus der Gruppe bestehend aus Glimmer, Vermiculit, Montmorillonite, Beidellit, Saponit, Hectorit, Stevensit, Megadiit, Ilerit, Kanemit, Illit und Sericit.

8. Verfahren nach Anspruch 1, wobei die Menge des Silylierungsmittels in dem modifizierten Ton, bezogen auf den Ton und das Silylierungsmittel weniger als 30 Gew.-% ist.

9. Verfahren nach Anspruch 1, wobei das Additive ein Polyamid oder ein Polyimid ist.

## Revendications

1. Procédé de fabrication d'un film résistant à l'humidité comprenant un film d'argile contenant de l'argile modifiée comme ingrédient principal, ledit procédé comprenant les étapes consistant à :
faire réagir l'argile avec un agent silylant pour préparer de l'argile modifiée,
échanger des ions d'intercalation dans l'argile modifiée avec des ions de lithium, dans lequel au moins 90% en moles d'ions échangeables dans l'argile modifiée sont des ions de lithium,
ajouter un solvant pour un pré-gel à l'argile modifiée avec échange par lithium et malaxer le solvant et l'argile modifiée avec échange par lithium pour former un pré-gel d'argile modifiée,
préparer une dispersion d'argile modifiée uniforme dudit pré-gel d'argile modifiée dans un solvant polaire à l'aide d'un agitateur ou d'un homogénéisateur, dans lequel, au stade final de la dispersion, un homogénéisateur est utilisé pour éliminer les grumeaux d'argile modifiée dans la dispersion, laquelle dispersion d'argile modifiée comprenant l'ajout d'un additif, a une concentration en argile modifiée de 0,3 à 15% en poids, se présente sous la forme d'une pâte d'argile et ne contient pas de grumeaux d'argile modifiée, et
appliquer la dispersion sur la surface d'un support à une épaisseur uniforme,
évaporer ledit solvant polaire pour former un film, et puis traiter le film thermiquement à une température fixée à au moins 230°C et jusqu'à 800°C pendant au moins 20 minutes et pas plus de 24 heures pour former ledit film résistant à l'humidité contenant ladite argile modifiée et ledit additif,
ledit film ayant un taux de transmission de vapeur d'eau inférieur à 0,2 g/ m²/jour à 40° C et 90% d'humidité relative (mesuré avec MOCON Aquatran modèle 1; méthode à pression égale), et dans lequel la température de perte de poids de 5% en mesure thermogravimétrique du film d'argile modifiée est d'au moins 300°C et d'au plus 760°C.

2. Procédé selon la revendication 1, dans lequel le solvant pour le pré-gel est de l'eau.

3. Procédé selon la revendication 1, dans lequel le solvant polaire est de l'éthanol ou du diméthylacétamide.

4. Procédé selon la revendication 1, dans lequel le film résistant à l'humidité (1) a une flexibilité et une résistance mécanique qui font du film un film autoportant, (2) lorsqu'il est utilisé à un rayon de courbure de 3 mm, ne génère pas de fissures [mesuré avec une machine d'essai de flexion de type mandrin (ISO 1519)], et (3) a un coefficient de perméabilité à l'oxygène gazeux inférieur à 1,3 x 10⁻²⁰mol m/m2sPa (4,0 x 10⁻¹⁵ cm²/s • cmHg) à température ambiante (mesuré avec un Gasperm -100 de de la société JASCO Corporation).

5. Procédé selon la revendication 1, dans lequel le film d'argile a une épaisseur d'au moins 0,003 mm et pas plus de 0,1 mm.

6. Procédé selon la revendication 1, dans lequel l'argile modifiée est formée en utilisant de l'argile naturelle ou de l'argile synthétique.

7. Procédé selon la revendication 1, dans lequel l'argile utilisée pour l'argile modifiée est au moins une choisie parmi le groupe constitué par le mica, la vermiculite, la montmorillonite, la beidellite, la saponite, l'hectorite, la stévensite, la magadiite, l'ilérite, la kanémite, l'illite et la séricite.

8. Procédé selon la revendication 1, dans lequel la quantité d'agent de silylation dans l'argile modifiée par rapport à l'argile et à l'agent de silylation est inférieure à 30 % en poids.

9. Procédé selon la revendication 1, dans lequel l'additif est un polyamide ou un polyimide.
